# EUROPEAN PATENT SPECIFICATION

(11) **EP 4 108 906 B1**
(45) Date of publication and mention of the grant of the patent: **27.05.2026**
(21) Application number: 22180601.1
(22) Date of filing: 23.06.2022
(51) Int. Cl.: F02M 61/16, F02M 55/00, F02M 61/14

(54) **FUEL VALVE ASSEMBLY**
BRENNSTOFFVENTILANORDNUNG
ENSEMBLE SOUPAPE DE CARBURANT

(30) Priority: 24.06.2021 DK PA202100679
(43) Date of publication of application: 28.12.2022
(73) Proprietor: Everllence, filial af Everllence SE, Tyskland, 2450 Copenhagen SV (DK)
(72) Inventor: Oftedal, Michael, 2450 Copenhagen SV (DK)
(74) Representative: Dragsted Partners A/S

(56) References cited:
- EP-A1- 3 279 463
- EP-A2- 1 239 147
- US-A1- 2005 006 898
- US-B1- 6 286 768

## Description

The present invention relates to a fuel valve assembly for controlling the injection of fuel into a combustion chamber of a two-stroke internal combustion engine. The invention also relates to an internal combustion engine comprising a fuel valve assembly.

Two-stroke internal combustion engines become more and more complex to control combustion in order to comply with environmental requirements mainly regulated under IMO Tier II and Tier III emission regulations. Due to this complexity, the space around the engine becomes correspondingly more limited to make room for more sensors, cooling, heating, controlling equipment, etc. Especially the space for existing equipment such as fuel valve, exhaust valve, etc., in the engine cover has become very limited by the increasing need for space for other equipment. Document US 6 286 768 discloses a valve assembly with a fixing pin for connecting two parts.

It is an object of the present invention to wholly or partly overcome the above disadvantages and drawbacks of the prior art. More specifically, it is an object to provide an improved fuel valve assembly requiring less mounting space in the engine cover.

The above objects, together with numerous other objects, advantages and features, which will become evident from the below description, are accomplished by a solution in accordance with the present invention by a fuel valve assembly for controlling the injection of fuel into a combustion chamber of a two-stroke internal combustion engine, comprising
- a first valve part, and
- a second valve part, where one of said valve parts comprises a portion at least partly surrounding a portion of the other valve part,
wherein the one of said valve parts comprising the portion at least partly surrounding the portion of the other valve part has an outer face, the fuel valve assembly further comprising a hole extending from a first imaginary point of the outer face towards a second imaginary point of the outer face, intersecting the first valve part and the second valve part, and a fixation part arranged in the hole, engaging the first valve part and the second valve part and connecting the first valve part and the second valve part.

Moreover, the fuel valve assembly for controlling the injection of fuel into a combustion chamber of a two-stroke internal combustion engine, comprises
- a first valve part, and
- a second valve part, where the first valve part comprises a portion at least partly surrounding and being connected to a portion of the second valve part,
wherein the first valve part has an outer face, the fuel valve assembly further comprising a hole extending from a first imaginary point of the outer face towards a second imaginary point of the outer face, intersecting the first valve part and the second valve part, and a fixation part arranged in the hole, engaging the first valve part and the second valve part and connecting the first valve part and the second valve part.

According to the invention, the fixation part may be cylindrical having a first end face, a second end face and an elongated slit arranged at least in a section of the fixation part where the fixation part intersects the first valve part and the second valve part, and the elongated slit extends in a direction extending from the first end face towards the second end face.

Also, the fixation part may have a middle point, and the elongated slit may extend from the first end face and at least past the middle point.

In addition, the fixation part may have a length along its axial extension, and the elongated slit may have a length of at least 10% of the length, preferably at least 35% of the length, and more preferably at least 65% of the length.

Further, the fixation part may have an outer configuration matching the shape of the hole.

Moreover, the fixation part may be resilient in a radial direction to a longitudinal axis of the fixation part.

Furthermore, the hole may extend along a longitudinal axis.

In addition, the longitudinal axis of the hole may be coincident with the longitudinal axis of the fixation part.

In addition, the fuel valve assembly may have a longitudinal axis.

Additionally, the longitudinal axis of the hole may be arranged in a plane which is perpendicular to the longitudinal axis of the fuel valve assembly.

Additionally, the fixation part may be made of spring steel.

Furthermore, the fixation part may be shaped as a tube having a C-shaped cross-section.

In addition, the hole may be a bore extending from a first imaginary point of the outer face towards a second imaginary point of the outer face, intersecting the first valve part and the second valve part.

Also, the hole may have an inner diameter, and the fixation part may have an outer diameter, the outer diameter being larger than the inner diameter.

In addition, the hole may extend from the first imaginary point of the outer face towards the second imaginary point of the outer face, intersecting the first valve part and the second valve part and providing a first groove in the first valve part and a second groove in the second valve part, the fixation part being arranged in the hole and engaging the first groove and the second groove.

Further, the first groove may have an inner diameter smaller than an inner diameter of the second groove.

Moreover, the inner diameter of the second groove may be larger than the outer diameter of the fixation part.

Additionally, the hole may have an inner diameter of 0.5-50 mm, preferably 1-25 mm, more preferably 1-10 mm, and even more preferably 1-5 mm.

Furthermore, the first valve part may comprise a flange at least partly surrounding a projecting part of the second valve part, the flange comprising an inner face and the outer face, the inner face facing an outer face of the projecting part. The hole extends through the flange from the first imaginary point of the outer face of the flange, through the inner face, forming the first groove, through the outer face of the projecting part, forming the second groove, and to the second imaginary point.

Also, the first valve part or the second valve part may be a nozzle tip, and the other of the first valve part and the second valve part may be a pre-chamber part or a valve housing.

In addition, the fuel valve assembly may comprise a needle movable in relation to and at least partly in a nozzle opening.

Further, the fuel valve assembly may comprise a fuel supply opening configured to receive fuel from a fuel pump.

Moreover, the first valve part may be a first valve housing part, and the second valve part may be a second valve housing part.

Additionally, the elongated slit or opening in the tube having the C-shaped cross-section may face the outer face of the projecting part of the second valve part.

Furthermore, the second valve part may have a base part from which the projecting part extends, and the flange may have an end flange face facing the base part and arranged at a distance from the base part.

Also, the second valve part may have a base part from which the projecting part extends, and the flange may have an end flange face facing the base part and arranged at a distance from the base part, enabling the second valve part to move towards the first valve part to increase the surface pressure between the projecting part and the first valve part in order to provide a tight seal between the projecting part and the first valve part.

In addition, the second valve part may have at least one cooling channel.

Further, the first valve part may be a first pump barrel part, and the second valve part may be a second pump barrel part.

Moreover, the fuel valve assembly may have a second hole extending from a first imaginary point of the outer face towards a second imaginary point of the outer face, intersecting the first valve part and the second valve part, and a fixation part arranged in the hole, engaging the first valve part and the second valve part and connecting the first valve part and the second valve part.

Additionally, the first and second holes may be parallel.

Furthermore, the fuel valve assembly may also comprise a fixation part arranged in the second hole.

Also, the flange may be a circumferential flange.

In addition, the projecting part may have an outer circumference.

Further, the fuel may be marine diesel, liquefied gas, gas or similar fuel.

Moreover, the invention relates to an internal combustion engine comprising a fuel valve assembly.

Finally, the invention also relates to the use of the fuel valve assembly in a large two-stroke diesel engine of the crosshead type.

The invention and its many advantages will be described in more detail below with reference to the accompanying schematic drawings, which for the purpose of illustration show some non-limiting embodiments and in which:
- Fig. 1: shows part of a fuel valve assembly in perspective,
- Fig. 2: shows a cross-sectional view of part of the fuel valve assembly of Fig. **1****,** and
- Fig. 3: shows a cross-sectional view of part of another fuel valve assembly.

All the figures are highly schematic and not necessarily to scale, and they show only those parts which are necessary in order to elucidate the invention, other parts being omitted or merely suggested.

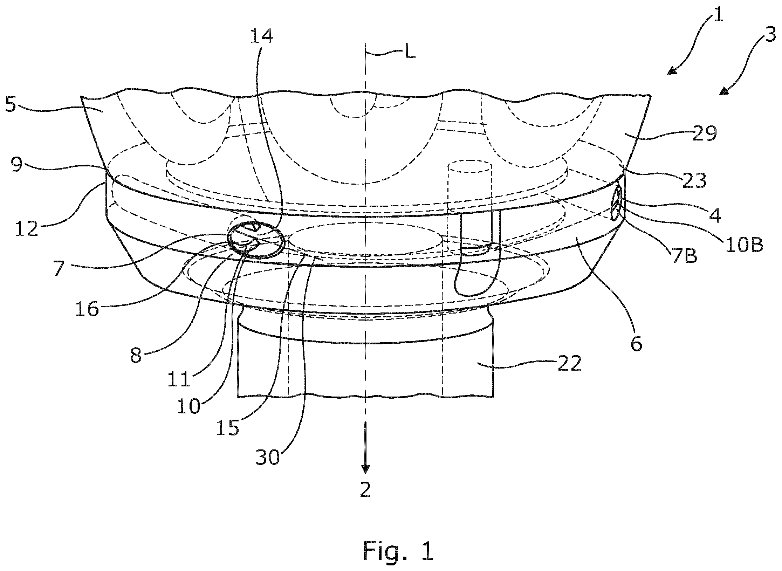

Fig. 1 shows part of a fuel valve assembly 1 for controlling the injection of fuel into a combustion chamber 2 of a two-stroke internal combustion engine 3. The fuel valve assembly 1 comprises a first valve part 4 and a second valve part 5, where one of said valve parts 4, 5 comprises a portion at least partly surrounding a portion of the other valve part 4, 5. In Fig. 1, a portion of the first valve part 4 fully surrounds a portion of the second valve part 5; however, in another embodiment (not shown), a portion of the second valve part 5 may surround a portion of the first valve part 4. The first valve part 4 is a nozzle tip 22, and the second valve part 5 is a pre-chamber part 23. The first valve part 4 has an outer face 6, and the fuel valve assembly 1 further comprises a hole 7 extending from a first imaginary point 8 of the outer face 6 towards a second imaginary point 9 of the outer face 6, and thereby the hole 7 intersects the first valve part 4 and the second valve part 5. The fuel valve assembly 1 further comprises a fixation part 10 arranged in the hole 7, engaging the first valve part 4 and the second valve part 5 and connecting the first valve part 4 to the second valve part 5. When connecting the first valve part 4 and the second valve part 5, the fixation part 10 enters the hole 7 from the first imaginary point 8 and is forced into the hole 7 so that the fixation part 10 engages both the first valve part 4 and the second valve part 5. Thus, the fixation part 10 has an outer configuration matching the shape of the hole 7 at least in the section where the fixation part 10 intersects with the second valve part 5.

In prior art, the nozzle tip, also called an atomiser, is connected to the pre-chamber by a bolt connection or a union nut. The union nut surrounds the nozzle tip and engages the outer face of the pre-chamber by a threaded connection and thereby takes up more space, corresponding to the size of the union nut, as compared to the connection of the present invention. In a bolt connection, the nozzle tip and the pre-chamber are each provided with a flange for making the bolt connection, and thus the bolt connection also takes up more space, corresponding to the size of the "added" flanges, as compared to the connection of the present invention.

As shown in Fig. 1, the fuel valve assembly 1 has a longitudinal axis L, and the hole 7 extends along a longitudinal axis 30 which is coincident with the longitudinal axis 15 of the fixation part 10. The longitudinal axis 30 of the hole 7 is arranged in a plane which is perpendicular to the longitudinal axis L of the fuel valve assembly 1. Thus, the longitudinal axis 30 of the hole 7 is substantially perpendicular to a longitudinal axis of the fuel valve assembly 1.

Thus, the fixation part 10 is cylindrical having a first end face 11, a second end face 12 and an elongated slit 14 arranged at least in a section of the fixation part 10 where the fixation part 10 intersects the first valve part 4 and the second valve part 5, and the elongated slit 14 extends in a direction from the first end face 11 towards the second end face 12. The elongated slit 14 makes it possible for the fixation part 10 to be compressed, which is very advantageous as then the first valve part 4 and the second valve part 5 can be moved slightly closer together for forming a tight seal between the first valve part 4 and the second valve part 5. The fixation part 10 has a middle point, and the elongated slit 14 extends at least past the middle point. Thus, the fixation part 10 has a length along its longitudinal axis 15, and the elongated slit 14 has a length of at least 10% of the length of the fixation part 10, preferably at least 35% of the length of the fixation part 10, and more preferably at least 65% of the length of the fixation part 10, in order to provide the movability of the first valve part 4 in relation to the second valve part 5. The fixation part 10 is resilient in a radial direction to the longitudinal axis 15 of the fixation part 10. As can be seen in Fig. 1, the hole extends from a first imaginary point 8 of the outer face 6 to a second imaginary point 9 of the outer face 6, and thereby the hole 7 intersects the first valve part 4 and the second valve part 5. The fixation part 10 extends in the hole and is inserted from one imaginary point/end.

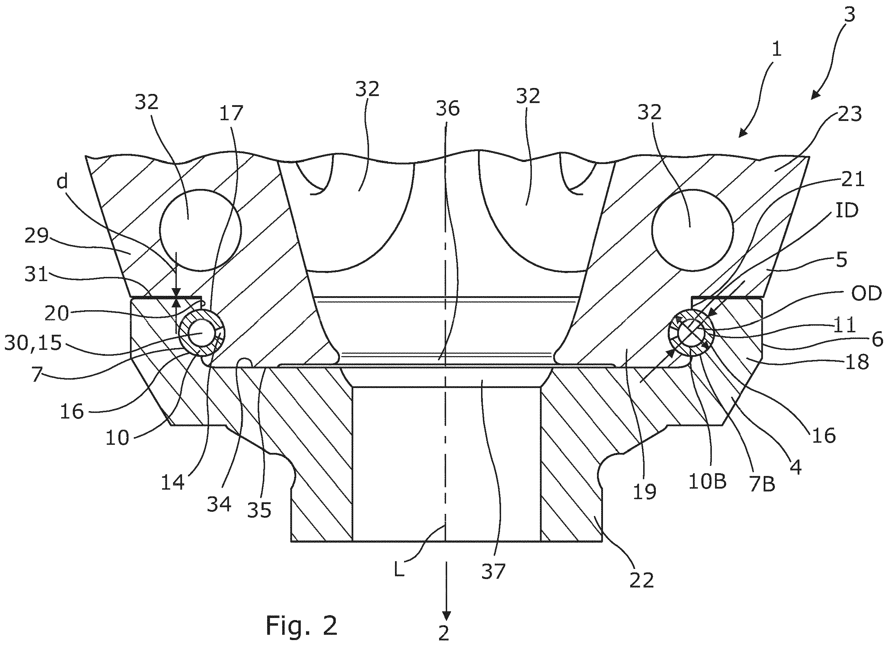

The fixation part 10 is made of spring steel or similar material providing resilient properties. As shown in Fig. 2, the fixation part 10 is shaped as a tube having a C-shaped cross-section i.e. a cross-sectional shape as the letter C, where the opening forming the "C" is the elongated slit 14 extending all the way through the fixation part 10 from the first end face 11 to the second end face 12. The hole 7 has an inner diameter ID, and the fixation part 10 has an outer diameter OD, the outer diameter being slightly larger than the inner diameter so that the fixation part 10 is compressed, thus providing a spring force for fastening the first valve part 4 to the second valve part 5.

By having a connection where the fixation part 10 arranged in the hole 7 intersects the first valve part 4 and the second valve part 5, a simple and very space-efficient connection is provided so that at least one cooling channel 32 can be arranged close to the nozzle tip 22, which is important for the optimal function of the nozzle tip 22. The connection of the present invention thus both takes up less space in the engine cover and optimises the positioning of the cooling channel(s) 32.

As shown in Figs. 1 and 2, the hole 7 extends from the first imaginary point 8 of the outer face 6 to the second imaginary point 9 of the outer face 6, intersecting the first valve part 4 and the second valve part 5 and providing a first groove 16 in the first valve part 4 and a second groove 17 in the second valve part 5 so that the fixation part 10 arranged in the hole 7 engages both the first groove 16 and the second groove 17, thus fastening the first valve part 4 and the second valve part 5 to each other. The first groove 16 has an inner diameter being smaller than an inner diameter of the second groove 17 in order to ease the movement of the second valve part 5, i.e. the pre-chamber part 23, in relation to the first valve part 4, i.e. the nozzle tip 22, so that a tight seal is formed between an end face 34 of the first valve part 4 and an end face 35 of the second valve part 5. Thus, the inner diameter of the second groove 17 may be larger than the outer diameter of the fixation part 10. The hole 7 has an inner diameter ID of 0.5-50 mm, preferably 1-25 mm, more preferably 1-10 mm and even more preferably 1-5 mm.

The fuel valve assembly 1 of Fig. 2 has a second hole 7B extending from the first imaginary point 8 of the outer face 6 to the second imaginary point 9 of the outer face 6, intersecting the first valve part 4 and the second valve part 5, and a second fixation part 10B arranged in the second hole 7, engaging the first valve part 4 and the second valve part 5 and connecting the first valve part 4 and the second valve part 5. The first and second holes 7, 7B are parallel and arranged at a distance from each other on opposing sides of an outlet 36 of the second valve part 5 and an inlet 37 of the first valve part 4.

In Fig. 2, the first valve part 4 comprises a flange 18 at least partly surrounding a projecting part 19 of the second valve part 5. The flange 18 comprises an inner face 20 and the outer face 6. The inner face 20 of the flange 18 faces an outer face 21 of the projecting part 19. The hole(s) extend(s) through the flange 18 from the first imaginary point 8 of the outer face 6 of the flange 18, through the inner face 20 of the flange 18, forming the first groove 16, through the outer face 21 of the projecting part 19, forming the second groove 17, and to the second imaginary point 9. The flange 18 is a circumferential flange extending around an outer circumference of the projecting part 19.

The second valve part 5 has a base part 29 from which the projecting part 19 extends, and the flange 18 has an end flange face 31 facing the base part 29 and arranged at a distance d from the base part 29, enabling the second valve part 5 to move towards the first valve part 4 to increase the surface pressure between the projecting part 19 and the first valve part 4 in order to provide a tight seal between the projecting part 19 and the first valve part 4.

As shown in Fig. 2, the elongated slit 14 or opening in the tube having the C-shaped cross-section faces the outer face 21 and the second groove 17 of the projecting part 19 of the second valve part 5. In this way, optimal flexibility is provided in the fixation part 10 as the opening/slit 14 is arranged along the movement direction of the second valve part 5 when the second valve part 5 is moved towards the first valve part 4.

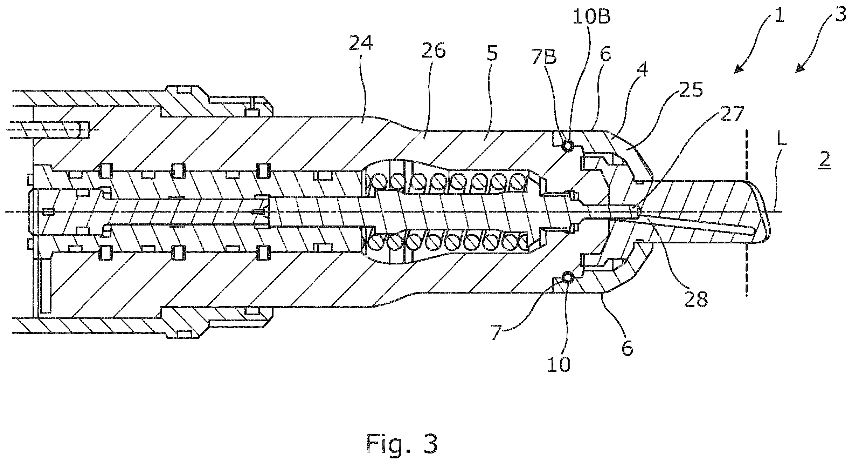

In Fig. 3, the fuel valve assembly 1 comprises a valve housing 24; the first valve part 4 is a first valve housing part 25, and the second valve part 5 is a second valve housing part 26. The fuel valve assembly 1 comprises a needle 27 movable in relation to and at least partly in a nozzle opening 28 to control the injection into the combustion chamber 2 of fuel from a fuel pump (not shown). The fuel valve assembly 1 comprises a fuel supply opening (not shown) configured to receive fuel from the fuel pump. The fuel is marine diesel, liquefied gas, gas or similar fuel.

In another embodiment (not shown), the first valve part 4 is a first pump barrel part, and the second valve part 5 is a second pump barrel part.

The invention also relates to an internal combustion engine 3, such as a large two-stroke diesel engine of the crosshead type, comprising the fuel valve assembly 1.

Although the invention has been described above in connection with preferred embodiments of the invention, it will be evident to a person skilled in the art that several modifications are conceivable without departing from the invention as defined by the following claims.

## Claims

1. A fuel valve assembly (1) for controlling the injection of fuel into a combustion chamber (2) of a two-stroke internal combustion engine (3), comprising:
- a first valve part (4), and
- a second valve part (5), where one of said valve parts (4, 5) comprises a portion at least partly surrounding a portion of the other valve part,
wherein the one of said valve parts (4, 5) comprising the portion at least partly surrounding the portion of the other valve part has an outer face (6), the fuel valve assembly further comprising a hole (7) extending from a first imaginary point (8) of the outer face towards a second imaginary point (9) of the outer face, intersecting the first valve part and the second valve part, and a fixation part (10) arranged in the hole, engaging the first valve part and the second valve part and connecting the first valve part and the second valve part, **characterized in that** the fixation part is cylindrical having a first end face (11), a second end face (12) and an elongated slit (14) arranged at least in a section of the fixation part where the fixation part intersects the first valve part and the second valve part, and the elongated slit extends in a direction from the first end face towards the second end face.

2. A fuel valve assembly according to claim 1, wherein the fixation part is resilient in a radial direction to a longitudinal axis (15) of the fixation part.

3. A fuel valve assembly according to any of the preceding claims, wherein the fixation part is made of spring steel.

4. A fuel valve assembly according to any of the preceding claims, wherein the fixation part is shaped as a tube having a C-shaped cross-section.

5. A fuel valve assembly according to any of the preceding claims, wherein the hole has an inner diameter (ID), and the fixation part has an outer diameter (OD), the outer diameter being larger than the inner diameter.

6. A fuel valve assembly according to any of the preceding claims, wherein the hole extends from the first imaginary point of the outer face towards the second imaginary point of the outer face, intersecting the first valve part and the second valve part and providing a first groove (16) in the first valve part and a second groove (17) in the second valve part, the fixation part being arranged in the hole and engaging the first groove and the second groove.

7. A fuel valve assembly according to any of the preceding claims, wherein the first valve part is a nozzle tip (22), and the second valve part is a pre-chamber part (23) or a valve housing (24).

8. A fuel valve assembly according to any of the preceding claims, wherein the first valve part is a first valve housing part (25), and the second valve part is a second valve housing part (26).

9. An internal combustion engine (3) comprising a fuel valve assembly according to any of claims 1-8.

## Patentansprüche

1. Kraftstoffventilanordnung (1) zur Steuerung der Kraftstoffeinspritzung in eine Brennkammer (2) eines Zweitakt-Verbrennungsmotors (3), aufweisend:
- ein erstes Ventilteil (4), und
- ein zweites Ventilteil (5), wobei eines der Ventilteile (4, 5) einen Abschnitt aufweist, der zumindest teilweise einen Abschnitt des anderen Ventilteils umgibt,
wobei das eine der Ventilteile (4, 5), das den Abschnitt aufweist, der den Abschnitt des anderen Ventilteils zumindest teilweise umgibt, eine Außenseite (6) aufweist, wobei die Kraftstoffventilanordnung weiterhin ein Loch (7), das sich von einem ersten imaginären Punkt (8) der Außenseite zu einem zweiten imaginären Punkt (9) der Außenseite erstreckt, dabei das erste Ventilteil und das zweite Ventilteil schneidet, sowie ein Befestigungsteil (10) aufweist, das in dem Loch angeordnet ist, das mit dem ersten Ventilteil und dem zweiten Ventilteil in Eingriff steht und das erste Ventilteil und das zweite Ventilteil verbindet, **dadurch gekennzeichnet, dass** das Befestigungsteil zylindrisch ist und eine erste Stirnseite (11), eine zweite Stirnseite (12) und einen länglichen Schlitz (14) aufweist, der zumindest in einem Bereich des Befestigungsteils angeordnet ist, in dem das Befestigungsteil das erste Ventilteil und das zweite Ventilteil schneidet, und sich der längliche Schlitz in einer Richtung von der ersten Stirnseite zu der zweiten Stirnseite hin erstreckt.

2. Kraftstoffventilanordnung nach Anspruch 1, wobei das Befestigungsteil in einer zu einer Längsachse (15) des Befestigungsteils radialen Richtung elastisch ist.

3. Kraftstoffventilanordnung nach irgendeinem der vorhergehenden Ansprüche, wobei das Befestigungsteil aus Federstahl gefertigt ist.

4. Kraftstoffventilanordnung nach irgendeinem der vorhergehenden Ansprüche, wobei das Befestigungsteil als ein Rohr mit einem C-förmigen Querschnitt geformt ist.

5. Kraftstoffventilanordnung nach irgendeinem der vorhergehenden Ansprüche, wobei das Loch einen Innendurchmesser (ID) aufweist und das Befestigungsteil einen Außendurchmesser (OD) aufweist, wobei der Außendurchmesser größer ist als der Innendurchmesser.

6. Kraftstoffventilanordnung nach irgendeinem der vorhergehenden Ansprüche, wobei sich das Loch von dem ersten imaginären Punkt der Außenseite zu dem zweiten imaginären Punkt der Außenseite hin erstreckt, dabei das erste Ventilteil und das zweite Ventilteil schneidet und eine erste Nut (16) in dem ersten Ventilteil und eine zweite Nut (17) in dem zweiten Ventilteil bereitstellt, wobei das Befestigungsteil in dem Loch angeordnet ist und mit der ersten Nut und der zweiten Nut in Eingriff steht.

7. Kraftstoffventilanordnung nach irgendeinem der vorhergehenden Ansprüche, wobei das erste Ventilteil eine Düsenspitze (22) ist, und das zweite Ventilteil ein Vorkammerteil (23) oder ein Ventilgehäuse (24) ist.

8. Kraftstoffventilanordnung nach irgendeinem der vorhergehenden Ansprüche, wobei das erste Ventilteil ein erstes Ventilgehäuseteil (25) ist, und das zweite Ventilteil ein zweites Ventilgehäuseteil (26) ist.

9. Verbrennungsmotor (3) mit einer Kraftstoffventilanordnung nach irgendeinem der Ansprüche 1-8.

## Revendications

1. Ensemble soupape de carburant (1) destiné à commander l'injection de carburant dans une chambre de combustion (2) d'un moteur à combustion interne à deux temps (3), comprenant :
- une première partie de soupape (4), et
- une deuxième partie de soupape (5), où l'une desdites parties de soupape (4, 5) comprend une portion entourant au moins partiellement une portion de l'autre partie de soupape,
dans lequel celle desdites parties de soupape (4, 5) comprenant la portion entourant au moins partiellement la portion de l'autre partie de soupape présente une face extérieure (6), l'ensemble soupape de carburant comprenant en outre un trou (7) s'étendant d'un premier point imaginaire (8) de la face extérieure vers un deuxième point imaginaire (9) de la face extérieure, coupant la première partie de soupape et la deuxième partie de soupape, et une partie de fixation (10) disposée dans le trou, s'engageant avec la première partie de soupape et la deuxième partie de soupape et reliant la première partie de soupape et la deuxième partie de soupape, **caractérisé en ce que** la partie de fixation est cylindrique ayant une première face d'extrémité (11), une deuxième face d'extrémité (12) et une fente allongée (14) disposée au moins dans une section de la partie de fixation où la partie de fixation croise la première partie de soupape et la deuxième partie de soupape, et la fente allongée s'étend dans une direction allant de la première face d'extrémité vers la deuxième face d'extrémité.

2. Ensemble soupape de carburant selon la revendication 1, dans lequel la partie de fixation est élastique dans une direction radiale par rapport à un axe longitudinal (15) de la partie de fixation.

3. Ensemble soupape de carburant selon l'une quelconque des revendications précédentes, dans lequel la partie de fixation est réalisée en acier à ressort.

4. Ensemble soupape de carburant selon l'une quelconque des revendications précédentes, dans lequel la partie de fixation a la forme d'un tube présentant une section transversale en forme de C.

5. Ensemble soupape de carburant selon l'une quelconque des revendications précédentes, dans lequel le trou présente un diamètre intérieur (ID) et la partie de fixation présente un diamètre extérieur (OD), le diamètre extérieur étant supérieur au diamètre intérieur.

6. Ensemble soupape de carburant selon l'une quelconque des revendications précédentes, dans lequel le trou s'étend du premier point imaginaire de la face extérieure vers le deuxième point imaginaire de la face extérieure, en coupant la première partie de soupape et la deuxième partie de soupape et en formant une première rainure (16) dans la première partie de soupape et une deuxième rainure (17) dans la deuxième partie de soupape, la partie de fixation étant disposée dans le trou et s'engageant dans la première rainure et la deuxième rainure.

7. Ensemble soupape de carburant selon l'une quelconque des revendications précédentes, dans lequel la première partie de soupape est une pointe de buse (22), et la deuxième partie de soupape est une partie de préchambre (23) ou un boîtier de soupape (24).

8. Ensemble soupape de carburant selon l'une quelconque des revendications précédentes, dans lequel la première partie de soupape est une première partie de boîtier de soupape (25), et la deuxième partie de soupape est une deuxième partie de boîtier de soupape (26).

9. Moteur à combustion interne (3) comprenant un ensemble soupape de carburant selon l'une quelconque des revendications 1 à 8.
